(19) **Europäisches Patentamt / European Patent Office / Office européen des brevets**

(11) **EP 4 650 153 A1**

(12) # EUROPEAN PATENT APPLICATION

(43) Date of publication:
**19.11.2025 Bulletin 2025/47**

(21) Application number: **24176627.8**

(22) Date of filing: **17.05.2024**

(51) International Patent Classification (IPC):
**B29C 65/08** (2006.01)

(52) Cooperative Patent Classification (CPC):
**B29C 66/1122; B29C 65/08; B29C 66/02245;**
**B29C 66/0246; B29C 66/30321; B29C 66/30322;**
**B29C 66/30325; B29C 66/7487**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Technische Universität Graz**
**8010 Graz (AT)**

(72) Inventors:
• **DE TRAGLIA AMANCIO FILHO, Sergio**
**8010 Graz (AT)**

• **SALES DE CARVALHO, Willian**
**8010 Graz (AT)**
• **MARCATTO DE OLIVEIRA, Gean Henrique**
**13 562 506 Sao Carlos (BR)**
• **SOMMITSCH, Christof**
**8010 Graz (AT)**
• **HERBST, Stefan**
**8010 Graz (AT)**

(74) Representative: **Patentanwaltskanzlei**
**Matschnig & Forsthuber OG**
**Biberstraße 22**
**Postfach 36**
**1010 Wien (AT)**

(54) **METHOD FOR PRODUCING AN OBJECT COMPRISING AT LEAST A FIRST AND A SECOND COMPONENT AND OBJECT PRODUCED BY SAID METHOD**

(57) The invention relates to a method for producing an object (1) comprising at least a first (1a) and a second component (1c), wherein the second component (1c) is connected onto the first component (1a), wherein at least one of the at least two components (1a, 1c) comprises cellulosic material, wherein the method comprises the following steps:
a) providing the first (1a) and the second component (1c),
b) determining an area of the surface of the first component (1a) that is intended be connected to the second component (1c), said area being referred to as connection area (1a'),
c) obtaining a structured connection area (1a") by structuring the surface of the connection area (1a'),
d) placing the second component (1c) at least partially on the structured connection area (1a") of the first component (1a),
e) joining the second component (1c) with the first component (1a) in a manner that includes at least partial interlocking of the surface of the second component (1c) with the structured connection area (1a") of the first component (1a).

Fig. 1

## Description

Field of the invention and description of prior art

The present invention relates to a method for producing an object comprising at least a first and a second component, wherein the second component is connected onto the first component, wherein at least one of the at least two components comprises cellulosic material.

According to prior art, components comprising cellulosic material, in particular wood parts, were typically assembled by using mechanical fasteners and/or by applying adhesives.

Fasteners such as screws, bolts, rivets, etc are well known and do have its limitations: Fasteners usually require pre-processing of the parts, such as drilling. In addition, the installation of the fasteners normally introduces stress concentration due to the presence of large bolts or fasteners on the structure. Specially polymer composites and some woods a are very sensitive to the pre-drilled through-holes. Moreover, rust stains may appear on the fasteners and corrosion can and does occur, compromising structural integrity.

Regarding adhesively bonded joints working with liquid adhesives, the costs are higher than for mechanical connectors regarding manufacturing equipment maintenance and demand long curing times. In addition, adhesive joints usually present brittle failure and limited load transferability due to their low out-of-plane strength. Finally, some thermoplastic and thermoset composites are very difficult to join via adhesive bonding, due to their intrinsic low structural polarity, which make them incompatible with most commercial adhesives.

Moreover, the use of fusion and solid-state and joining techniques (e.g. laser and friction stir welding processes, respectively) can be used to overcome these issue. However, all these known techniques do still have some limitations and drawbacks.

Summary of the invention

It is an object of the present invention to provide a method for producing an object of the above-mentioned kind, said object having a joint with high structural integrity being able to withstand high loads.

This object is solved by method for producing an object comprising at least a first and a second component according to the present invention by comprising the following steps:

a) providing the first and the second component, b) determining an area of the surface of the first component that is intended be connected to the second component, said area being referred to as connection area, c) obtaining a structured connection area by structuring the surface of the connection area, d) placing the second component at least partially on the structured connection area of the first component, and e) joining the second component with the first component in a manner that includes at least partial interlocking of the surface of the second component with the structured connection area of the first component.

Interlocking, in particular macro- and micromechanical interlocking, of the surface of the second component with the structured connection area of the first component includes chemical bonding of materials of the first and the second component. In particular, micromechanical interlocking in a polymer-wood structure or metal-wood structure refers to the physical engagement between a polymer/metal and a wood surface. Small-scale features on the wood and/or the metal, such as grooves, ridges or dimples, increase the mechanical bond between the respective materials. These features are provided by way of the structured connection surface. For instance, when the polymer is applied to the textured surface of the wood, it flows into these features and, after curing or solidifying, forms mechanical interlocks or anchor. This interlocking mechanism significantly increases the bond strength between the polymer and the wood, as it prevents the materials from easily separating under mechanical stress.

The cellulosic material can consist of wood (for instance, oak, birch, beech, ash, spruce, pine, etc.) and/or wood composites. The structuring can take place either on the cellulosic material or on the other component. Instead of "joining" the second component with the first component also the terms "fusing","fastening" or "bonding" apply to the present invention.

The structuring according to step c) can be obtained by way of additive and/or subtractive method, for instancy by applying a laser beam roughening the surface, and/or by 3D-printing methods and/or spraying primers creating a chemically reactive surface with one or both components, creating surface details by electron beam structuring the metal surface locally forming complex topologies and structures without adding or removing material. Additionally, the use of chemical and electrochemical surface modification processes to improve interface adhesion forces could be also explored.

Regarding the cellulosic material, a lignin content between 1 to 15%, in particular between 5% to 15%, of dry weight can provide especially good results. The cellulosic material can be made of wood, paper, cardboard, plaques of thermoplastic polymers reinforced with wood flour, fiber, or chips or wood, in particular ply wood. In case of paper, a lignin content lower than 5% - typically in the range of 1% of residual lignin, can provide good results.

Advantageously, the structured connection area comprises protrusions protruding with a total height between 0.01 and 1 mm, creating cavities between the protrusions, wherein preferably the total volume of a single protrusion ranges between 0.05 mm$^3$ and 1.6 mm$^3$.

By alternative or in addition, the structured connection area comprises protrusions protruding with a total height between 1 mm and 20 mm, creating cavities between the protrusions, wherein the second component comprises recesses for receiving the protrusions, wherein preferably the total volume of a single protrusion ranges between 1.6 mm$^3$ and 1200 mm$^3$.

Said sizes of protrusions can apply to each of the protrusions arranged within the structured connection area.

Advantageously, the second and the first component each comprise protrusions. In particular, the respective protrusions can be arranged in a complementary manner enhancing the interlocking effect when both components are joined.

Preferably, between 5% and 40%, preferably between 10% and 30% of the structured connection area consist of protrusions. Of course, the area surrounding each protrusion can be interpreted as having an intrusion. Hence, an area consisting of protrusions can also be interpreted as an area consisting of intrusions - depending on the point of view. This percentage is measured as an orthogonal projection into a plane, said plane being essentially parallel to the surface of the connection area.

Advantageously, the protrusions can have a cylindrical base extending towards an end section having a wider diameter than the cylindrical base.

In particular, the end section of the protrusion can be either shaped as cylinder, a cone, or a section of ball, wherein the longitudinal axis of the shape of the end section is in line with the longitudinal axis of the cylindrical base. Such shapes are easy to be reproduced, in particular by way of 3D-printing methods which can create complex geometries, enabling a higher reliability and consistency of the quality of the joint. Instead of the term "ball" also the term "sphere" can be used; the term "in line" refers to a coaxial arrangement.

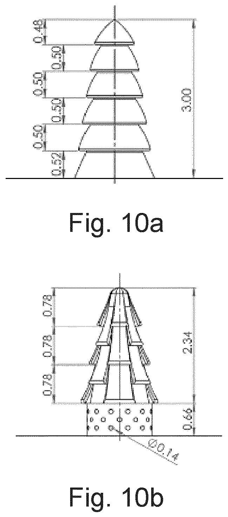

Of course, also more complex shapes of protrusions can be applied. Examples of such protrusions are shown in Figures 10a and 10b (the measurements disclosed therein refer to millimetres).

Advantageously, the structured connection area can have an arithmetic average roughness ranging between 1 μm and 500 μm.

Preferably, the structured connection area can stretch along at least 25 % of the surface touching each other, i.e. of the contacting surface of the first and the second component.

Advantageously, a coating layer is applied on the first or the second component.

A coating layer covering the structured connection surface can be arranged on either the first or the second component further enhancing the interlocking between both components. This coating layer can be deposited by various techniques such as spraying, trowelling, rolling and curtain coating, as well as by additive manufacturing routes. The main substances of this coating layers are polymer-based such as acrylics, elastomers, silicone, epoxy and polyurethane among others.

Of course, the interlocking between the first and the second component does not have only apply to the structured connection surface but can extend also to additional areas surrounding said surface.

One aspect of the inventions suggests to produces wood-metal, wood-polymer or wood-composite hybrid joints using ultrasonic vibration as energy source for heat generation, i.e. two existing parts being fused.

Preferably, the first and the second component are connected in step e by transferring ultrasonic energy through the first or the second component towards the connection area, said ultrasonic energy being provided by a sonotrode of an ultrasonic welding machine, said sonotrode moving along an outer surface of the first or the second component to transfer said frictional energy through the first or the second component towards at least the structured connection area enabling interlocking, in particular micro-mechanical interlocking, of the surface of the second component with the structured connection area of the first component, said interlocking including chemical bonding of materials of the first and the second component.

The term "frictional energy" can be described as mechanical energy that is turned into heat by way of vibrational friction. Preferably, the frequency of the sonotrode ranges between 10 kHz to 35 kHz, in particular between 15 kHz and 20 kHz. Advantageously, the sonotrode vibrates with an amplitude of up to 5 to 150 μm (micrometres), in particular 10 to 50 μm. Preferably, the sonotrode has a tool tip with a structured/patterned surface having a rectangular shape for improving the grip and the contact of the contact surfaces, wherein the width and the length of the flat tip ranges between 5mm and 20 mm and wherein during the joining process of step e) the sonotrode is pushed with a force ranging between 100 N and 2000 N onto the outer surface of the component (facing away from the joint created in step e)). The longitudinal movement speed of the sonotrode can range for instance between 10 - 30 m/min.

Advantageously, at least one of the at least two components consist of metal, polymer, composites, or wood-composite materials. For example, the wood materials or composites thereof can comprise oak, birch, beech, ash, spruce, pine. Exemplary metals are titanium alloys, aluminium alloys, magnesium alloys, steels; exemplary polymers and composites are poly-ether-ether-ketone, polyamide, acrylonitrile butadiene styrene, polycarbonate.

Preferably, the first component consists of wood or a wood based material and the first component comprises the connection area, wherein the second component consists of polymer or composite parts, wherein the second component is created by way of additive manufacturing, wherein the process of creating and joining the second component with the first component according to step e is performed by at least partially liquifying the material intended to create the second component and 3D-printing at least one layer of said material on the structured connection area, causing micro-mechanical interlocking effects between the deposited 3D-printed material of the second component and the material of the first component.

The first layer has the strategy of depositing as much reinforced or unreinforced molten polymer as possible over the surface of the other component, for instance a wooden surface, keeping the temperature high in the printing layer. In this way, the polymer can flow into the roughness, grooves, and dimples. The first 3D-printed layer 1cL1 has a lower viscosity due to the temperature of the polymer/composite being maintained at a lower printing speed. The second layer 1cL2 uses standard process parameters for additive manufacturing. Higher printing speeds and lower layer heights are used to maintain good adhesion between printed layers, and high mechanical strength.

The main advantage is in maintaining the temperature of the polymer being deposited and fully infiltrating the imperfections of the structured surface. This higher temperature reduces the viscosity of the molten polymer. With total infiltration of the polymer into the imperfections of the structured surface, the mechanical interlock and consequently the mechanical strength of the joint increase.

The first layer is relevant to ensure good adhesion between the materials. A subsequent layer with the same parameters as the first layer could be deposited with a different material so that there is a mixture between these two materials and the adhesion between the layers increases. I.e., the first layer could be from a different material, for instance first layer polyamide and following layers could be polymer composites, for instance carbon fiber reinforced polyamide

Advantageously, the additive manufacturing (AM) technique to create the second component is realized by different techniques, such as fused filament fabrication, automated tape/fiber placement, stereolithography or selective laser sintering.

The advantages and disadvantages of the cited AM technologies are as follows:

1 - Fused filament fabrication (FFF)

a) Advantages:

i. Cost-effective: Relative low cost of the equipment and materials.
ii. Material variety: can process a wide range of thermoplastic materials, including special filaments such as composites, magnetic, conductive, flexible and also metal filaments.
iii. Ease to use: the machine operation do not require high qualify workers

b) Disadvantages:

i. Surface finish and resolution: Has limitations on the resolution of small parts and a rough finishing
ii. Mechanical properties: The parts produced with FFF have anisotropic mechanical properties, meaning their strength can very depending of the orientation of the layers.
iii. Size limitations: Large parts are not feasible.

2 - Automated Fiber/Tape Placement (ATP)

a) Advantages:

i. Efficient for large parts: It is feasible to produce large parts, mainly for aerospace industry.
ii. Allowed the use of high-performance materials, such as thermoset composites
iii. Shows a high precision and repeatability

b) Disadvantages:

i. Material and process cost: Mainly the machinery is very expensive
ii. Limited material variety: limited to a sort of thermoset composite
iii. Requires high skilled operators and difficult maintenance

3 - Stereolithography (SLA)

a) Advantages

    i. High resolution and surface finishing
    ii. Wide range of materials
    iii. Production of intricate designs in a very small scale (> 1 mm)

b) Disadvantages

    i. Material cost and durability
    ii. Post-curing
    iii. Limited part size. Large parts are very expensive to be manufactured

4 - Selective Laser Sintering

a) Advantages:

    i. No support structures needed
    ii. High dimensional accuracy
    iii. Low material waste

b) Disadvantages:

    i. High initial costs
    ii. Low surface finishing
    iii. Post-processing needed

Moreover, the present invention also relates to an object produced by a method according to the invention.

Brief description of the drawings

In the following, in order to further demonstrate the present invention, illustrative and non-restrictive embodiments are discussed, as shown in the drawings, which show:

Fig. 1            an exemplary object to be produced,

Fig. 2a          a detail "A" of Fig. 1,

Fig. 2b          alternative details that could be applied to the object according to Fig. 1,

Fig. 2c          cross sectional views of different types exemplary of protrusions,

Fig. 2d          perspective views on the protrusions according to Fig. 2c,

Fig. 3a and b     schematics regarding step c) of the method,

Fig. 4a to c      schematics regarding the process of establishing the joint according to one embodiment of the invention,

Fig. 5a          an exemplary object obtained produced by applying a method according to the invention involving an ultrasonic wood joining technique,

Fig. 5b          a cross sectional view of the object according to Fig. 5a,

Fig. 6a to c      details a) to c) according to Fig. 5b,

Fig. 7a and       b another example of an object obtained by applying a method according to the invention including a cross sectional view,

Fig. 8a a schematic regarding another aspect of the invention related to additive wood joining,

Fig. 8b a detailed view of the process of applying a first layer on a wood substrate according to Fig. 8a,

Fig. 8c an alternative variant compared to Fig. 8b,

Fig. 8d a wood substrate with a complete first layer applied on the substrate,

Fig. 8e a cross sectional view of the wood substrate including the layers applied to it,

Fig. 8f an alternative variant compared to Fig. 8e,

Fig. 9a an image of an object obtained by way applying a method according to the invention,

Fig. 9b a schematic view of the object according to Fig. 9a,

Fig. 9c a cross sectional view of the object of Fig. 9a along the longitudinal section,

Fig. 9d a cross sectional view of the object of Fig. 9a along the travers section, and

Fig. 10a and 10b examples of more complex shapes of protrusions.

Detailed description of embodiments of the invention

In the following figures identical reference signs refer to identical features unless expressly depicted otherwise. The reference signs are only for informational purpose and do not delimit the scope of protection.

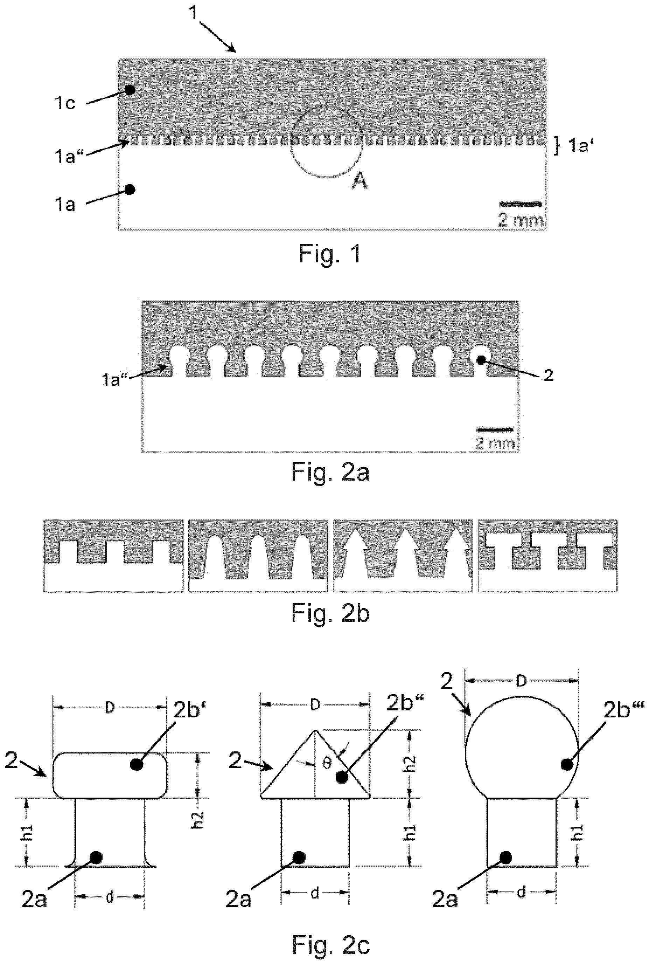

Fig. 1 shows an exemplary object 1 to be produced. This object 1 can be produced by applying a method according to the invention. Therein, the object 1 comprises at least a first 1a and a second component 1c, wherein the second component 1c is connected onto the first component 1a, wherein at least one of the at least two components 1a, 1c comprises cellulosic material, wherein the method comprises the following steps: a) providing the first 1a and the second component 1c, b) determining an area of the surface of the first component 1a that is intended be connected to the second component 1c, said area being referred to as connection area 1a', c) obtaining a structured connection area 1a" by structuring the surface of the connection area 1a', d) placing the second component 1c at least partially on the structured connection area 1a" of the first component 1a, e) joining the second component 1c with the first component 1a in a manner that includes at least partial interlocking of the surface of the second component 1c with the structured connection area 1a" of the first component 1a.

Fig. 2a provides a closer view on the detail A marked in Fig. 1. Therein, it is clearly visible that the structured connection area 1a" comprises protrusions 2. These protrusions can have a total height of, for instance, between 0,01 and 1 mm, creating cavities 3 between the protrusions 2, wherein preferably the total volume of a single protrusion 2 ranges between 0.05 mm$^3$ and 1.6 mm$^3$. By alternative, the protrusions 2 can protrude with a total height between 1 mm and 20 mm, creating cavities 3 between the protrusions 2, wherein the second component 1c comprises recesses for receiving the protrusions, wherein preferably the total volume of a single protrusion 2 ranges between 1.6 mm$^3$ and 1200 mm$^3$. Moreover, while not shown in the figures, it is possible that the second and the first component 1c, 1a each comprise protrusions 2. They can be arranged in a complementary manner.

Preferably, between 5% and 40%, even more preferably between 10% and 30% of the structured connection area 1a" consist of protrusions 2.

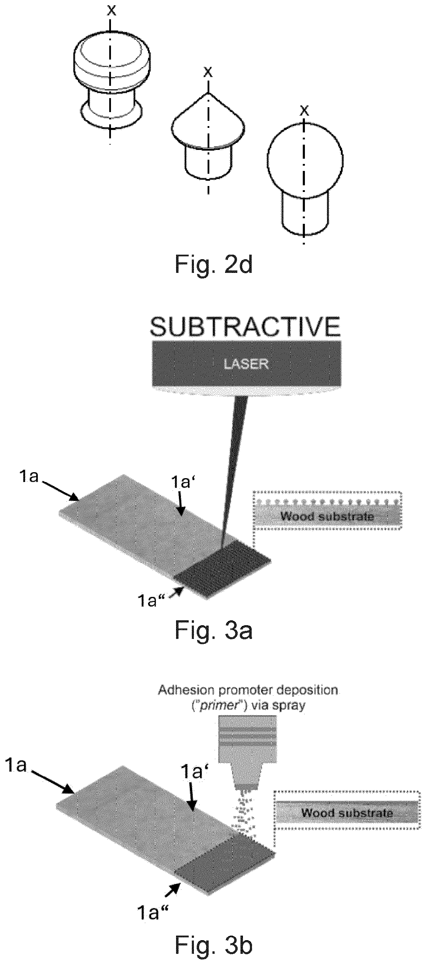

Fig. 2b discloses alternative shapes protrusions that could be applied to the object according to Fig. 1. Moreover, Fig. 2c shows cross sectional views of different types exemplary of protrusions and Fig. 2d shows perspective views of these protrusions.

Theses protrusions according to Fig. 2c and 2d have proven especially effective enhancing the connection between the first component 1a and the second component 1c. All the protrusions shown in Fig. 2c and 2d have a cylindrical base 2a extending towards an end section 2b having a wider diameter than the cylindrical base 2a. The end section can be either shaped as a cylinder 2b' (see on the left), a cone 2b" (see in the middle), or as a ball 2b''' sitting on top of the cylinder. The longitudinal axis of the shape of each end section is in line with the longitudinal axis x of the cylindrical base 2a. These protrusions are easier to be reproduced than other shapes, in particular by way of 3D-printing methods, enabling a higher reliability and consistency of the quality of the joint.

The protrusions 2 shown in the Figures can be embodied as through-thickness reinforcements (TTRs). These structures can be in submillimetric scale of dimensions, where D, d, h1 or h2 are below 1 mm; and millimetric scale, when D, d, h1 and h2 are between 1 and 20 mm. An overview of a few possible geometries is shown in the Figure below. The pin-head covers different head shapes as mentioned, such as flat surface head, squared or rectangular head, arrow head and ball head. In particular, the diameter of the pin head is referred to as D, the diameter of the body of the pin is referred as d, the body height is referred as h1 and the head height is referred as h2. The apex angle or the inner angle of a cone is referred as θ.

$$a = \frac{d}{D}, \quad b = \frac{h_2}{h_1}, \quad c = \theta$$

The following constrains ratios can be applied to the dimensions of the through-the-thickness structures in this invention:

$$a \leq 1, \quad 0.3 \leq b \leq 2, \quad 30° \leq c \leq 90°$$

The total length of the structure (L) can be expressed as the sum of the head height and steam height:

$$L = h_1 + h_2$$

Where L for submillimetric TTRs structures is lower than 2 mm and L for micrometric TTRs structures is between 2 mm and 40 mm.

The arrow head can be approximated as a cone, and the volume (Vc) of the head can be calculated using the formula for the volume of a cone:

$$V_c = \frac{1}{3}\pi \left(\frac{D}{2}\right)^2 \qquad (1)$$

The volume of a cone can be modified in terms of the apex angle θ by the tangent of half the apex angle given by:

$$\theta = 2tan^{-1}\left(\frac{D}{2h_2}\right) \qquad (2)$$

And now, substituting the θ in the formula for the volume of a cone:

$$V_{c\theta} = \frac{\pi}{6}d^2 h_2 \tan\left(\frac{\theta}{2}\right) \qquad (3)$$

Moreover, the head can be considered as a sphere for the ball head shape and the volume can be calculated by the volume of sphere (Vs).

$$V_s = \frac{4}{3}\pi r^3 \qquad (4)$$

The pin body can be approximated as a cylinder, and the volume (V_b) is determined for the formula of the cylinder volume:

$$V_b = \pi\left(\frac{d}{2}\right)^2 h_1 \qquad (5)$$

Thus, the total volume (V_t) of the structure with cone or sphere are determined by:

$$V_{tc} = V_{c\theta} + V_b \quad \textbf{or } V_{ts} = V_s + V_b$$

By replacing the formulas for volume there are:

$$V_{tc} = \frac{\pi}{6} d^2 h_2 \tan\left(\frac{\theta}{2}\right) + \pi\left(\frac{d}{2}\right)^2 h_1 \textbf{ or } V_{ts} = \frac{4}{3}\pi r^3 + \pi\left(\frac{d}{2}\right)^2 h_1 \qquad (6)$$

Thus, the range of the total volume for this invention is between 0.05 mm³ and 1.6 mm³ for the submillimetric TTRs structures and total volume between 1.6 mm³ and 1200 mm³ for the millimetric TTRs structures.

The structured connection area 1a" can have an arithmetic average roughness Ra ranging between 1 μm and 500 μm.

Fig. 3a and 3b show schematics regarding step c) of the method. Fig. 3a shows an example using a subtractive method, wherein a laser cuts cavities into a wood substrate, thus creating protrusions between the cavities. Fig. 3b shows an alternative way to produce the protrusions, namely by applying an adhesion promoter causing an uneven surface structure.

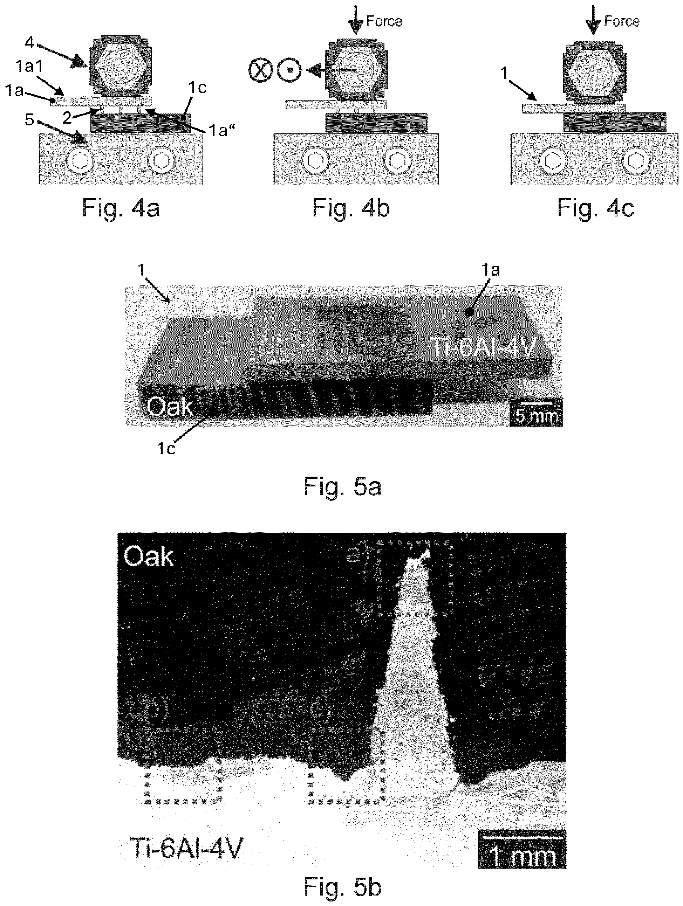

Fig. 4a to c show schematics regarding the process of establishing an object 1, wherein two components 1a and 1c are connected to each other. Therein, the first component 1a is made of metal (just as an example; the method is not limited to metal as a first component), said first component having protrusions 2 extending towards a second component 1c, namely a wooden substrate. A sonotrode 4 is placed above the first component 1a. The second component 1c is placed above an anvil 5.

Fig. 4b shows the application of force by the sonotrode 4 on the first component 1a pushing the protrusions 2 into the second component 1c. Moreover, the sonotrode 4 itself vibrates with ultrasonic frequency in a plane that is parallel to the surface of the first component 1a. The ultrasonic vibration causes transfer of frictional energy towards the surface 1a" resulting in softening/melting of the wood-metal interface allowing joint consolidation according to Fig. 4c. The first and the second component 1a, 1c are connected in step e) by transferring ultrasonic energy through the first or the second component 1a, 1c towards the connection area 1a", said ultrasonic energy being provided by a sonotrode 4 of an ultrasonic welding machine, said sonotrode 4 moving along an outer surface 1a1 of the first component 1a to transfer said frictional energy through the first component 1a towards at least the structured connection area 1a" enabling interlocking, in particular micro-mechanical interlocking, of the surface of the second component 1c with the structured connection area 1a" of the first component 1a, said interlocking including chemical bonding of materials of the first and the second component 1a, 1c. Fig. 4c shows a the finished state of the object 1, wherein both components 1a and 1c are connected.

Fig. 5a shows an exemplary image of an object 1 obtained produced by applying a method according to the invention involving an ultrasonic wood joining technique. This object 1 basically represents the object according to the schematic shown in Fig. 4c. The structured connection area 1a" can stretch along at least 25 % of the surface of both components 1a and 1c touch each other.

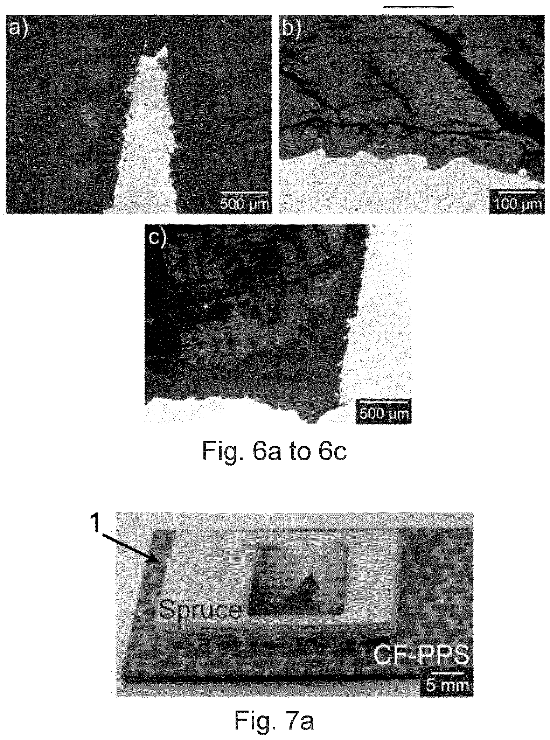

Fig. 5b shows cross sectional view of the object 1 according to Fig. 5a. Fig. 6a to 6c show details a) to c) according to Fig. 5b displaying the interlocking effects causing a strong connection between the first component 1a and the second component 1c.

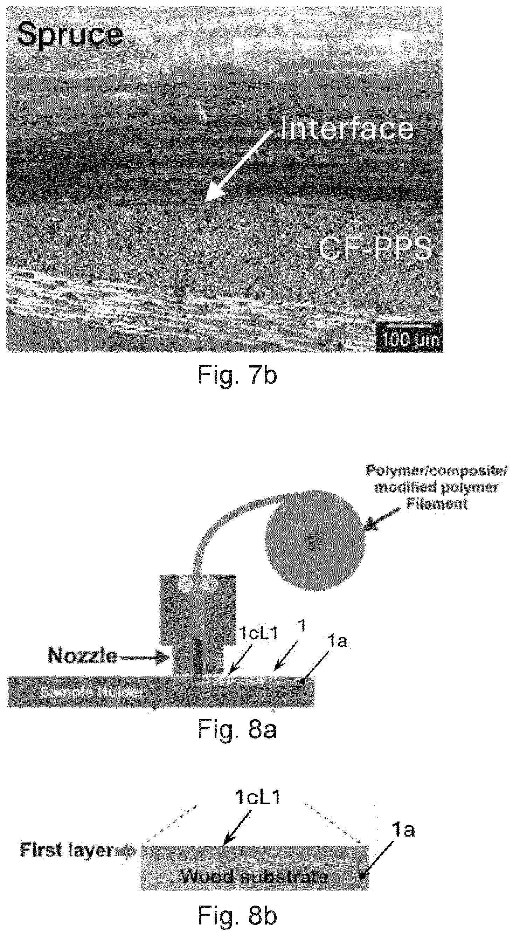

Fig. 7a and 7b disclose another example of an object 1 obtained by applying a method according to the invention including a cross sectional view (Fig. 7b). The materials to be connected are in this case spruce and carbon fiber reinforced polyphenylene sulfide (CF-PPS).

According to this aspect of the invention, at least one of the at least two components 1a, 1c can consist of metal, polymer, composites or wood-composite materials.

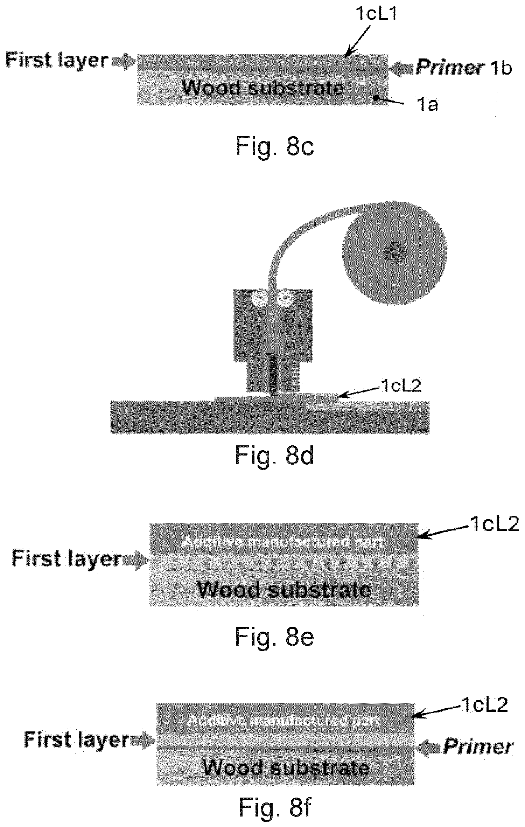

Fig. 8a show a schematic regarding another aspect of the invention related to additive wood joining. Therein, the first component 1a consists of wood or a wood based material and wherein the first component 1a comprises the connection area 1a', wherein the second component 1c consists of polymer or composite parts, wherein the second component 1c is created by way of additive manufacturing, wherein the process of creating and joining the second component 1c with the first component 1a according to step e is performed by at least partially liquifying the material intended to create the second component 1c and 3D-printing at least one layer 1cL1, also referred to as first layer, of said material on the structured connection area 1a", causing micro-mechanical interlocking effects between the deposited 3D-printed material of the second component 1c and the material of the first component 1b.

Fig. 8b shows a detailed view of the process of applying a first layer 1cL1 on a wood substrate 1a according to Fig. 8a. Fig. 8c shows an alternative variant wherein a primer 1b (also referred to as coating layer 1b) is applied on the first component 1a to create a thin layer of protrusions enhancing the connection of the first layer 1cL1.

The first layer 1cL1 can be applied with the strategy of depositing as much reinforced or unreinforced molten polymer as possible over the wood surface, keeping the temperature high in the printing layer. In this way, the polymer can flow into the roughness, grooves and dimples. The first 3D-printed layer 1cL1 can consist of the same material as the following layers has a lower viscosity due to the temperature of the polymer/composite being maintained at a lower printing speed. The second layer 1cL2 (see Fig. 8d to 8f) uses standard process parameters for additive manufacturing. Higher printing speeds and lower layer heights are used to maintain good adhesion between printed layers and high mechanical strength.

The main advantage is in maintaining the temperature of the polymer being deposited and fully infiltrating the imperfections of the structured surface. This higher temperature reduces the viscosity of the molten polymer. With total infiltration of the polymer into the imperfections of the structured surface, the mechanical interlock and consequently the mechanical strength of the joint increase.

The first layer 1cL1 is relevant to ensure good adhesion between the materials. A subsequent layer with the same parameters as the first layer 1cL1 with unreinforced polymer could be deposited with a different material e.g., reinforced polymer so that there is a mixture between these two materials and the adhesion between the layers increases. I.e. the first layer 1cL1 could be from a different material, for instance first layer 1cL1 polyamide and following layers could be polymer composites, for instance carbon fiber reinforced polyamide.

In the present example, the additive manufacturing technique to create the second component 1c is realized as fused filament fabrication. By alternative, it is also possible to use automated tape placement or stereolithography.

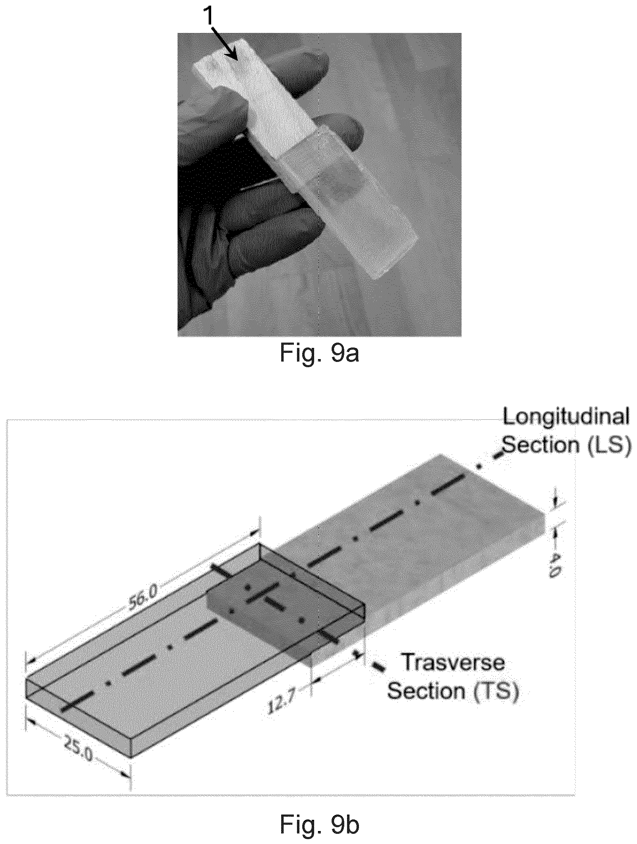

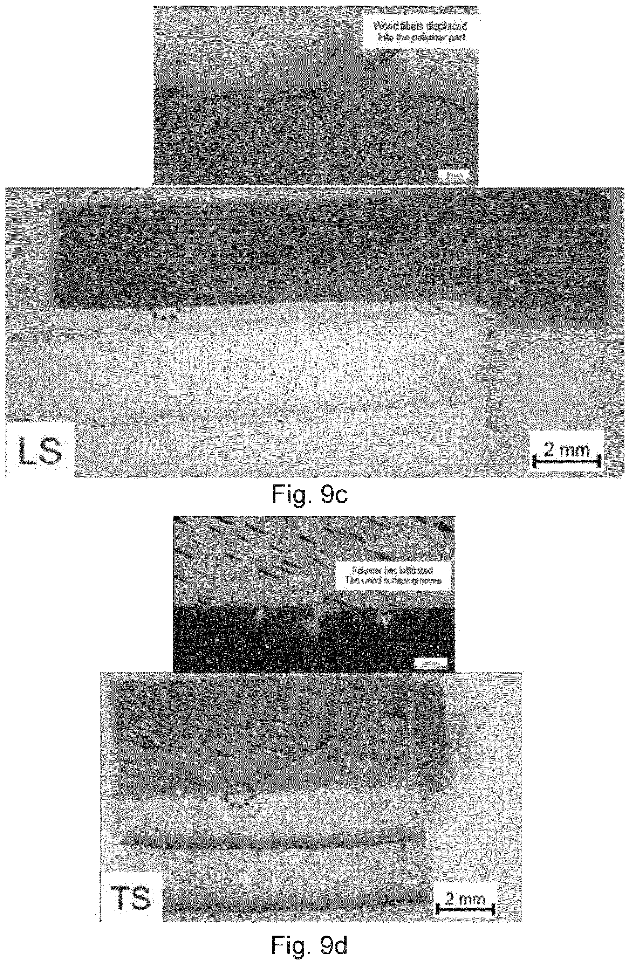

Fig. 9a shows an image of an object 1 obtained by way applying the method shown in Fig. 8b and 8e according to the invention. Fig. 9b shows a schematic view of the object 1 according to Fig. 9a. Fig. 9c shows a cross sectional view of the object 1 of Fig. 9a along the longitudinal section and Fig. 9d a cross sectional view of the object 1 of Fig. 9a along the travers section.

The invention also relates to an object 1 produced by a method according to invention. Such objects can be used for instance as a part of wooden constructions such as wooden houses, in particular multi-storey houses having high requirements regarding the stability, durability and aesthetics of visible joints. Also, chassis parts of cars can be manufactured by the method according to the invention. Moreover, the present invention is also applicable to produce interior parts for the aviation industry.

**Claims**

1. Method for producing an object (1) comprising at least a first (1a) and a second component (1c), wherein the second component (1c) is connected onto the first component (1a), wherein at least one of the at least two components (1a, 1c) comprises cellulosic material, wherein the method comprises the following steps:

   a) providing the first (1a) and the second component (1c),
   b) determining an area of the surface of the first component (1a) that is intended be connected to the second component (1c), said area being referred to as connection area (1a'),
   c) obtaining a structured connection area (1a") by structuring the surface of the connection area (1a'),
   d) placing the second component (1c) at least partially on the structured connection area (1a") of the first component (1a),
   e) joining the second component (1c) with the first component (1a) in a manner that includes at least partial interlocking of the surface of the second component (1c) with the structured connection area (1a") of the first component (1a).

2. Method according to claim 1, wherein the structured connection area (1a") comprises protrusions (2) protruding with a total height between 0.01 and 1 mm, creating cavities (3) between the protrusions (2), wherein preferably the total volume of a single protrusion (2) ranges between 0.05 mm$^3$ and 1.6 mm$^3$.

3. Method according to claim 1, wherein the structured connection area (1a") comprises protrusions (2) protruding with a total height between 1 mm and 20 mm, creating cavities (3) between the protrusions (2), wherein the second component (1c) comprises recesses for receiving the protrusions, wherein preferably the total volume of a single protrusion (2) ranges between 1.6 mm$^3$ and 1200 mm$^3$.

4. Method according to claims 2 or 3, wherein the second and the first component (1c, 1a) each comprise protrusions (2).

5. Method according to any of the claims 2 to 4, wherein between 5% and 40%, preferably between 10% and 30% of the structured connection area (1a") consist of protrusions (2).

6. Method according any of the claims 2 to 5, wherein the protrusions (2) have a cylindrical base (2a) extending towards an end section (2b) having a wider diameter than the cylindrical base (2a).

7. Method according to claim 6, wherein the end section (2b) of the protrusion (2) is either shaped as cylinder (2b'), a cone (2b") or a section of ball (2b'''), wherein the longitudinal axis of the shape of the end section (2b) is in line with the longitudinal axis (x) of the cylindrical base (2a).

8. Method according to any of the preceding claims, wherein the structured connection area (1a") has an arithmetic average roughness (Ra) ranging between 1 μm and 500 μm.

9. Method according to any of the preceding claims, wherein the structured connection area (1a") stretches along at least 25 % of the surface touching each other.

10. Method according to any of the preceding claims, wherein a coating layer (1b) is applied on the first or the second component (1a, 1c).

11. Method according to any of the preceding claims, wherein the first and the second component (1a, 1c) are connected in step e) by transferring ultrasonic energy through the first or the second component (1a, 1c) towards the connection area (1a"), said ultrasonic energy being provided by a sonotrode (4) of an ultrasonic welding machine, said sonotrode (4) moving along an outer surface (1a1, 1c1) of the first or the second component (1a, 1c) to transfer said frictional energy through the first or the second component (1a, 1c) towards at least the structured connection area (1a") enabling interlocking, in particular micro-mechanical interlocking, of the surface of the second component (1c) with the structured connection area (1a") of the first component (1a), said interlocking including chemical bonding of materials of the first and the second component (1a, 1c).

12. Method according to claim 11, wherein at least one of the at least two components (1a, 1c) consists of metal, polymer, composites or wood-composite materials.

13. Method according to any of the claims 1 to 10, wherein the first component (1a) consists of wood or a wood based material and wherein the first component (1a) comprises the connection area (1a'), wherein the second component (1c) consists of polymer or composite parts, wherein the second component (1c) is created by way of additive manufacturing, wherein the process of creating and joining the second component (1c) with the first component (1a) according to step e) is performed by at least partially liquifying the material intended to create the second component (1c) and 3D-printing at least one layer (1cL1) of said material on the structured connection area (1a"), causing micro-mechanical interlocking effects between the deposited 3D-printed material of the second component (1c) and the material of the first component (1b).

14. Method according to claim 13, wherein the additive manufacturing technique to create the second component (1c) is realized as fused filament fabrication, automated tape placement or stereolithography.

15. Object (1) produced by a method according to any of the preceding claims.

Fig. 1

Fig. 2a

Fig. 2b

Fig. 2c

Fig. 2d

Fig. 3a

Fig. 3b

Fig. 4a  Fig. 4b  Fig. 4c

Fig. 5a

Fig. 5b

Fig. 6a to 6c

Fig. 7a

Fig. 7b

Fig. 8a

Fig. 8b

First layer ➡ Wood substrate

1cL1

Primer 1b

1a

Fig. 8c

1cL2

Fig. 8d

First layer ➡ Additive manufactured part

Wood substrate

1cL2

Fig. 8e

First layer ➡ Additive manufactured part

Wood substrate

1cL2

Primer

Fig. 8f

Fig. 9a

Fig. 9b

Fig. 9c

Fig. 9d

Fig. 10a

Fig. 10b

Europäisches
Patentamt

European
Patent Office

Office européen
des brevets

# EUROPEAN SEARCH REPORT

**Application Number**

EP 24 17 6627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/240917 A1 (MAYER JÖRG [CH] ET AL) 8 August 2019 (2019-08-08) | 1-13,15 | INV.<br>B29C65/08 |
| A | * paragraph [0021] *<br>* paragraph [0066] *<br>* paragraph [0087] *<br>* paragraph [0129] - paragraph [0159] *<br>* paragraph [0186] - paragraph [0199]; figures 1-30 * | 14 | |
| X | US 2021/162675 A1 (LEHMANN MARIO [CH] ET AL) 3 June 2021 (2021-06-03) | 1-5,8-15 | |
| A | * paragraph [0065] - paragraph [0117]; figures 1-11 * | 6,7 | |
| X | US 2018/370181 A1 (TORRIANI LAURENT [CH] ET AL) 27 December 2018 (2018-12-27) | 1-5, 8-13,15 | |
| A | * paragraph [0032] - paragraph [0036]; figures 1-7,9-14 *<br>* paragraph [0064] * | 6,7,14 | |

**TECHNICAL FIELDS SEARCHED (IPC)**

B29C

The present search report has been drawn up for all claims

| Place of search | Date of completion of the search | Examiner |
|---|---|---|
| Munich | 22 October 2024 | Peña, Alejandro |

EPO FORM 1503 03.82 (P04C01)

**EP 4 650 153 A1**

## ANNEX TO THE EUROPEAN SEARCH REPORT
## ON EUROPEAN PATENT APPLICATION NO.

EP 24 17 6627

22-10-2024

| Patent document cited in search report | | Publication date | Patent family member(s) | | Publication date |
|---|---|---|---|---|---|
| US 2019240917 | A1 | 08-08-2019 | CA | 3036115 A1 | 12-04-2018 |
| | | | CN | 109803812 A | 24-05-2019 |
| | | | EP | 3523113 A1 | 14-08-2019 |
| | | | JP | 2019534179 A | 28-11-2019 |
| | | | KR | 20190067784 A | 17-06-2019 |
| | | | US | 2019240917 A1 | 08-08-2019 |
| | | | WO | 2018065601 A1 | 12-04-2018 |
| US 2021162675 | A1 | 03-06-2021 | EP | 3781383 A1 | 24-02-2021 |
| | | | US | 2021162675 A1 | 03-06-2021 |
| | | | WO | 2019202012 A1 | 24-10-2019 |
| US 2018370181 | A1 | 27-12-2018 | US | 2016114550 A1 | 28-04-2016 |
| | | | US | 2018370181 A1 | 27-12-2018 |

EPO FORM P0459

For more details about this annex : see Official Journal of the European Patent Office, No. 12/82